# FASCICULE DE BREVET EUROPEEN

(11) **EP 3 010 141 B1**
(45) Date de publication et mention de la délivrance du brevet: **02.11.2022**
(21) Numéro de dépôt: 15189978.8
(22) Date de dépôt: 15.10.2015
(51) Int. Cl.: H02P 21/22, H02P 21/00

(54) **DISPOSITIF DE DÉFLUXAGE AUTOMATIQUE ET ADAPTATIF ET PROCÉDÉ METTANT EN OEUVRE UN TEL DISPOSITIF**
VORRICHTUNG ZUR AUTOMATISCHEN UND ADAPTIVEN FELDSCHWÄCHUNG, UND VERFAHREN ZUR VERWENDUNG EINER SOLCHEN VORRICHTUNG
AUTOMATIC, ADAPTIVE DEFLUXER DEVICE AND METHOD USING SUCH A DEVICE

(30) Priorité: 16.10.2014 FR 1402329
(43) Date de publication de la demande: 20.04.2016
(73) Titulaire: THALES, 92400 Courbevoie (FR)
(72) Inventeur: GUGUEN, Stéphane, 78400 Chatou (FR); DAL, Arnaud, 78400 Chatou (FR); GIRIER, Thomas, 78400 Chatou (FR)
(74) Mandataire: Atout PI Laplace

(56) Documents cités:
- EP-A2- 0 638 457
- US-A1- 2014 125 261

## Description

L'invention se situe dans le domaine de pilotage de moteurs (on parle aussi de machines électriques) à courants alternatifs. Elle concerne un dispositif de défluxage automatique et adaptatif. L'invention concerne aussi un procédé de défluxage automatique et adaptatif mettant en œuvre un tel dispositif.

Dans le domaine du pilotage des moteurs à courants alternatifs, qu'ils soient de type moteur synchrone ou asynchrone, on utilise couramment la commande vectorielle.

La commande vectorielle est un terme générique désignant l'ensemble des commandes tenant compte en temps réel des équations du système qu'elle commande. Le nom de ces commandes vient du fait que les relations finales sont vectorielles à la différence des commandes scalaires. Les relations ainsi obtenues sont bien plus complexes que celles des commandes scalaires, mais, en contrepartie, elles permettent d'obtenir de meilleures performances lors des régimes transitoires.

Pour un moteur à courants alternatifs, il existe une limite de fonctionnement. Il s'agit de la limitation de la puissance qui est imposée par la source d'alimentation. En effet, une alimentation en courant est réalisée à partir d'une source de tension régulée en courant. Cette source est imparfaite et elle est limitée en puissance par la tension du bus continu d'alimentation.

Dans le mode de fonctionnement le plus élémentaire de la commande vectorielle, où l'angle d'autopilotage est maintenu constant à 0, il existe une vitesse limite, appelée vitesse de base, au-delà de laquelle il n'est plus possible de maintenir le courant maximum (et donc le couple maximum) à cause de la limitation en tension de la source d'alimentation. L'écart entre cette tension limite et la force électromotrice (connue aussi sous son abréviation f.e.m.) de la machine devient, en effet, insuffisant pour continuer à fonctionner à courant maximum.

Au-delà de la vitesse de base, on perd le contrôle des boucles de régulation.

Au-delà de la vitesse de base, si l'on souhaite continuer à contrôler le couple de la machine, il est nécessaire de défluxer (ou bien de désexciter) comme pour les machines à courant continu. La puissance maximale de fonctionnement, limitée par la source d'alimentation, est alors maintenue constante et le couple maximum décroît.

Ce fonctionnement est appelé le fonctionnement en survitesse et il est obtenu par défluxage.

Les techniques de défluxage actuelles s'appuient sur des lois de commande issues de la mise en équation des paramètres de la machine. Ce type de fonctionnement présente deux inconvénients majeurs. Tout d'abord, il est nécessaire de connaître les paramètres physiques de la machine comme, par exemple, l'inductance d'axe direct de l'induit, l'inductance d'axe en quadrature de l'induit, la résistance de l'induit, ... De plus, les machines peuvent être amenées à fonctionner dans des zones non linéaires dans lesquelles la mise en équation des lois de commande n'est plus nécessairement vérifiée.

La connaissance des paramètres de la machine n'est pas toujours évidente car la valeur des paramètres peut varier en fonction de la fréquence d'utilisation de la machine, de la température et de la saturation des matériaux électromagnétiques.

De plus, certains paramètres de la machine sont parfois détenus exclusivement par le concepteur de la machine et ne sont pas communiqués à l'industriel en charge de réaliser la commande du moteur.

Les techniques actuelles de défluxage se basant sur une connaissance précise des paramètres de la machine, il est indispensable de réadapter systématiquement la commande de défluxage dès que l'on change le moteur à piloter.

Actuellement, une fois les lois de commande en mode linéaire établies, une phase expérimentale est nécessaire pour venir pondérer les paramètres de la machine en fonction de différents paramètres physiques tels que la vitesse de rotation, la température et la saturation de la machine. Autrement dit, en plus de réadapter la commande de défluxage à chaque nouvelle machine, il faut en plus effectuer des tests expérimentaux supplémentaires pour adapter les paramètres.

Le défluxage est facilement réalisable sur une machine à inducteur bobiné. En revanche, dans le cas des machines à aimants permanents, le défluxage est obtenu en injectant des courants générant un champ démagnétisant.

Dans ce dernier cas, l'efficacité du défluxage ne peut être obtenue que grâce à des commandes sophistiquées basées sur une connaissance précise des paramètres de la machine qui permettront, par une mise en équation, de mettre en œuvre les lois de commande du moteur. Le document EP 0 638 457 décrit un appareil d'entraînement et de contrôle d'un moteur à aimants permanents apte à contrôler le courant de défluxage selon le changement de tension de la batterie. , cet état de la technique correspond au préambule de la revendication 1.

La présente invention propose de s'affranchir de la connaissance des paramètres de la machine dans la technique de défluxage et de réaliser ainsi un principe de défluxage automatique et adaptatif.

A cet effet, l'invention est décrite par la revendication de dispositif 1 et des modes préférentiels de l'invention sont décrits dans les revendications 2 à 9.

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement un dispositif de pilotage en commande vectorielle d'un moteur à aimants permanents selon l'invention;
- la figure 2 représente un diagramme de Fresnel en régime de fonctionnement défluxé ;
- la figure 3 représente schématiquement un moyen de génération d'un courant du dispositif selon l'invention ;
- la figure 4 représente schématiquement un exemple de pilotage en commande vectorielle d'un moteur à aimants permanents selon l'invention;
- la figure 5 représente les étapes d'un procédé de pilotage en commande vectorielle d'un moteur à aimants permanents selon l'invention.

Par souci de clarté, les mêmes éléments porteront les mêmes repères dans les différentes figures.

Dans cette demande, nous évoquerons essentiellement les moteurs à aimants permanents. Il est à noter que l'invention s'applique également à des moteurs à rotor bobiné en faisant varier le courant dans le rotor.

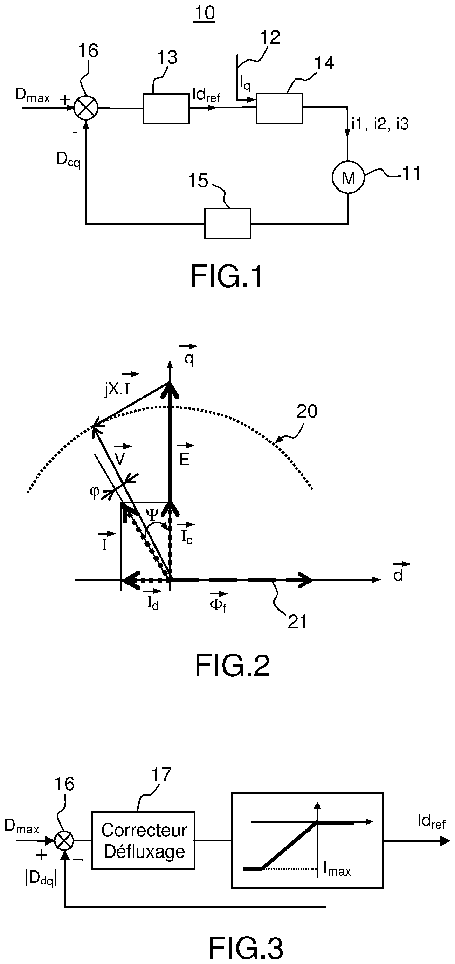

La figure 1 représente schématiquement un dispositif 10 de pilotage en commande vectorielle d'un moteur 11 à aimants permanents selon l'invention.

Un modèle scalaire ne permet pas de connaître le module et l'orientation d'un champ magnétique. Afin de les déterminer, un autre modèle se base sur des relations de base du moteur 11. Pour cela, on utilise une transformation mathématique qui permet notamment de remplacer trois enroulements décalés de 120° par deux enroulements (notés d et q) en quadrature et solidaires du rotor du moteur 11. Autrement dit, pour être dans un plan lié au rotor, deux transformations successives sont faites. La première transformation permet de ramener le modèle triphasé à un modèle diphasé. La seconde transformation permet une représentation de type Fresnel en modélisant la machine dans un repère tournant lié au rotor. Ainsi, à partir d'un domaine réel, une transformation mathématique, ou transformée, permet de manipuler des grandeurs dans un domaine vectoriel.

Le dispositif 10 de pilotage en commande vectorielle du moteur 11 à aimants permanents est apte à recevoir une consigne 12 de fonctionnement. La consigne 12 de fonctionnement peut être une consigne de vitesse ou bien une consigne de couple à délivrer par le moteur 11. Le moteur 11 comprend un stator comprenant des enroulements. Le stator est apte à recevoir un courant de pilotage et produire un champ magnétique tournant, les enroulements du stator générant une tension fcem aux bornes du moteur 11. Cette tension est communément appelée force contre-électromotrice. Le moteur 11 comprend un rotor comprenant des aimants permanents produisant un champ magnétique destiné à suivre le champ magnétique tournant. Selon l'invention, le dispositif 10 de pilotage comprend un moyen de génération 13 d'un courant Idref dans un domaine vectoriel. Le dispositif comprend également un moyen de calcul 14 configuré pour faire une transformée du courant Idref du domaine vectoriel vers un domaine réel permettant la génération du courant de pilotage i1, i2, i3 pour du courant triphasé. Le dispositif 10 comprend un moyen de calcul inverse 15 configuré pour faire une transformée inverse d'un paramètre mesuré dans le domaine réel sur les enroulements statoriques du moteur 11 en une transformée du paramètre Ddq dans le domaine vectoriel. Le paramètre mesuré dans le domaine réel peut être par exemple une tension fcem aux bornes du moteur, aussi communément désignée par le terme force contre-électromotrice. Le moyen de calcul inverse 15 fait dans ce cas une transformée inverse de la tension fcem mesurée dans le domaine réel sur les enroulements statoriques du moteur 11 en une transformée de la tension Ddq dans le domaine vectoriel.

Le dispositif 10 comprend enfin un moyen de comparaison 16 de la valeur de la transformée inverse du paramètre Ddq avec une valeur maximale prédéfinie Dmax du paramètre, dont le résultat permet de piloter le moyen de génération 13 du courant Idref dans le domaine vectoriel.

Les grandeurs du domaine réel correspondent aux grandeurs réelles que l'on mesure au niveau du dispositif 10. On peut notamment citer une tension ou un courant réels.

Le domaine vectoriel fait référence à un domaine dans lequel une grandeur est décomposée en deux composantes selon un axe direct d et un axe transverse q. Le domaine vectoriel correspond à un repère tournant lié au champ magnétique du stator.

Ainsi, le courant Idref généré par le moyen de génération 13 du courant dans le domaine vectoriel est un courant de consigne direct établi en coordonnées de Park et le moyen de calcul 15 est configuré pour recevoir un courant de consigne Iqref en quadrature établi en coordonnées de Park et proportionnel à la consigne de vitesse (ou de couple) que reçoit le moteur 11.

La figure 2 représente un diagramme de Fresnel en régime de fonctionnement défluxé. Sur le diagramme de Fresnel représenté sur la figure 2, on peut voir les deux axes direct d et transverse q du domaine vectoriel. Le moteur présente une limite en tension 20. Du fait de la limite en tension 20, en fonctionnement normal, le moteur 11 a une vitesse limite, appelée vitesse de base, au-delà de laquelle il n'est plus possible de maintenir le courant maximum, et donc le couple maximum. Pour étendre la plage de vitesse, il faut réduire le flux magnétique dans l'axe direct d. Pour cela, on injecte un courant générant un flux démagnétisant qui permet une réduction de la tension induite globale. Autrement dit, l'affaiblissement du champ inducteur en commande vectorielle se fait en régulant le courant Idref en fonction de la vitesse.

Plus précisément, le moyen de génération 13 du courant est un correcteur de défluxage délivrant le courant Idref nul si la valeur de la transformée inverse du paramètre est inférieure à la valeur maximale prédéfinie de paramètre (c'est-à-dire inférieure à la valeur Dmax) ou non nul si la valeur de la transformée inverse du paramètre (c'est-à-dire la tension Ddq) est supérieure ou égale à la valeur maximale prédéfinie de paramètre Dmax.

La figure 3 représente schématiquement un tel moyen de génération 13 d'un courant Idref du dispositif 10 selon l'invention. Le moyen de comparaison 16 détermine si la valeur de Ddq est inférieure ou supérieure ou égale à la valeur Dmax. Le correcteur de défluxage 17 délivre alors le courant Idref correspondant. Le correcteur de défluxage 17 peut par exemple être un correcteur proportionnel intégral ou un correcteur intégral seulement.

Il est à noter que le courant Idref est nul si la valeur de Ddq est inférieure à la valeur Dmax. Quand la valeur de Ddq est supérieure à la valeur Dmax, le correcteur 17 génère un courant Idref négatif. Ainsi, comme représenté sur la figure 2 sur l'axe direct d, le courant Idref diminue le flux d'inducteur 21, et ainsi la force contre-électromotrice aux bornes du moteur 11. Cela permet d'étendre la gamme de vitesse du moteur 11, et la tension ne sort pas du cercle de la tension limite 20 (représenté sur la figure 2).

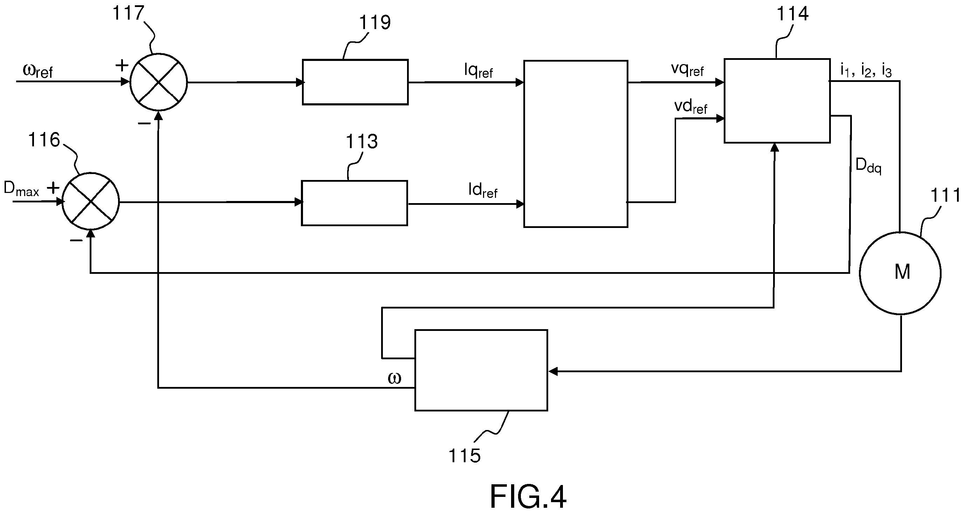

La figure 4 représente schématiquement un exemple de pilotage en commande vectorielle d'un moteur 111 à aimants permanents selon l'invention. Le moteur 111 reçoit d'un moyen de calcul 114 des courants de pilotage i1, i2 et i3. Un moyen de calcul inverse 115 est configuré pour faire une transformée inverse de la vitesse mesurée aux bornes du moteur 111 en une transformée de la vitesse pour donner la valeur w, correspondant à la pulsation électrique obtenue à partir de la fréquence électrique f par l'opération w = 2πf (la fréquence électrique f étant elle-même obtenue en multipliant le nombre de pôles de la machine électrique par la fréquence de rotation du rotor) . La valeur w est transférée au moyen de calcul 114.

Plus précisément, des valeurs vdref et vqref, composantes de la tension respectivement sur l'axe direct d et l'axe transverse q du domaine vectoriel, sont calculées à partir des courants Id, Iq et de la pulsation électrique w. Les valeurs vdref et vqref sont ramenées en rapport cyclique, correspondant à une image de la tension comprise entre 0 et 1. Le module du rapport cyclique est la valeur Ddq. Autrement dit, l'invention permet de travailler avec des tensions dans le domaine réel et des images de ces tensions dans le domaine vectoriel, sans aucun besoin d'un capteur de tension. Un moyen de comparaison 116 compare la valeur de la transformée inverse de la tension Ddq avec une valeur maximale prédéfinie de la tension Dmax. Le résultat de cette comparaison permet de piloter un moyen de génération 113 d'un courant dans le domaine vectoriel. Selon le résultat de la comparaison, le moyen de génération 113 génère un courant Idref nul ou non nul. Le courant Idref est nul si la tension Ddq est inférieure à la tension maximale Dmax. Et le courant Idref est non nul si la tension Ddq est supérieure ou égale à la tension maximale Dmax. Le courant Idref est alors dirigé vers le moyen de calcul 114 pour générer les courants de pilotage i1, i2, i3.

En parallèle, une valeur de vitesse du moteur 111 est transmise au moyen de calcul inverse 115. Le moyen de calcul inverse 115 fait une transformée inverse de la vitesse mesurée aux bornes du moteur 111 dans le domaine réel en une transformée de la vitesse pour donner la valeur w. Un moyen de comparaison 117 compare la valeur de la transformée inverse de la vitesse w avec une valeur maximale prédéfinie de la vitesse wref pour que le moteur 111 n'excède pas une vitesse maximale. Le résultat de cette comparaison permet de piloter un régulateur de vitesse 119 délivrant un courant Iqref dans le domaine vectoriel. Le courant Iqref est transmis au moyen de calcul 114 en tant que consigne de vitesse de fonctionnement du moteur 111. Représentés dans le diagramme de Fresnel de la figure 2, les courants Idref et Iqref dans le domaine vectoriel sont en fait les deux composantes d'un courant I représenté vectoriellement et définissant ainsi l'angle d'autopilotage PSI. Et les courants de pilotage i1, i2 et i3 du moteur 111 sont générés en fonction des valeurs de Idref et Iqref.

L'exemple de pilotage en commande vectorielle du moteur 111 prend en compte ici une consigne de vitesse. Néanmoins, comme déjà précisé précédemment, il est tout à fait possible de piloter le moteur 111 avec une consigne de couple.

On peut ainsi obtenir un défluxage en jouant sur l'angle d'autopilotage PSI, en créant une composante de flux démagnétisant. L'affaiblissement du champ inducteur en commande vectorielle se fait en régulant le courant Idref en fonction de la vitesse. A vitesse faible et moyenne, Idref est commandé à zéro. Quand la vitesse augmente jusqu'à atteindre les limites imposées par la force contre-électromotrice qui crée une chute de tension telle que le moteur ne peut plus accélérer, le courant Idref est augmenté. Augmenter le courant Idref réduit le flux d'inducteur et ainsi la force contre-électromotrice, ce qui permet d'étendre la gamme de vitesse du moteur.

Autrement dit, l'injection du courant Idref permet de défluxer le moteur de manière automatique. En effet, le courant Idref imposé par le pilotage n'est pas issu d'équations complexes mais est directement défini en fonction d'un seul critère qui est la force contre-électromotrice aux bornes du moteur. De ce fait, le défluxage est automatique car il n'est pas prédéfini par des équations ou tabulations. Et le défluxage est également adaptatif : lorsque l'on change le moteur à piloter, le dispositif s'adapte aux variations de paramètres physiques tels que la vitesse du moteur, mais aussi la température et la saturation du moteur.

Ainsi, il n'est plus nécessaire de connaître les paramètres physiques de la machine, parfois inconnus de l'utilisateur. Et aucune réadaptation systématique de la commande de défluxage n'est nécessaire quand on change le moteur à piloter.

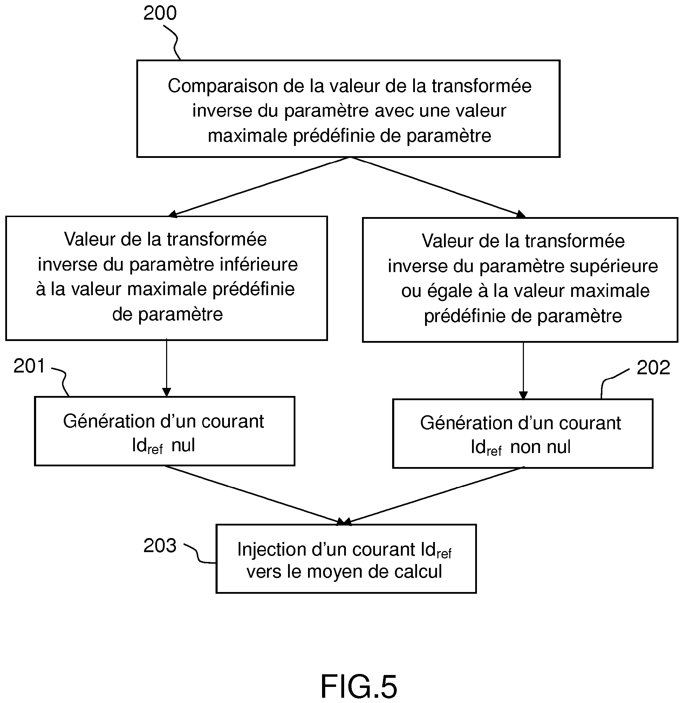

La figure 5 représente les étapes d'un procédé de pilotage en commande vectorielle d'un moteur à aimants permanents selon l'invention.

Le procédé selon l'invention comporte au préalable une étape 200 de comparaison de la valeur de la transformée inverse du paramètre avec une valeur maximale prédéfinie de paramètre. Selon le résultat de la comparaison, le procédé comporte une étape de génération d'un courant nul (étape 201) si la valeur de la transformée inverse du paramètre est inférieure à la valeur maximale prédéfinie de paramètre. Si la valeur de la transformée inverse du paramètre est supérieure ou égale à la valeur maximale prédéfinie de paramètre, le procédé comporte une étape de génération d'un courant Idref non nul (étape 202). Enfin, le courant est injecté vers le moyen de calcul 14 et est destiné à modifier le champ magnétique produit par le stator de manière à ce que le paramètre (par exemple la tension) corresponde à la consigne de fonctionnement.

## Revendications

1. Dispositif (10) de pilotage en commande vectorielle d'un moteur électrique (11, 111) apte à recevoir une consigne de fonctionnement, le moteur (11, 111) comprenant :
• un stator comprenant des enroulements, apte à recevoir un courant de pilotage (i1, i2, i3) et produire un champ magnétique tournant, les enroulements du stator générant une tension force contre-électromotrice (fcem) aux bornes du moteur (11, 111)
• un rotor produisant un champ magnétique destiné à suivre le champ magnétique tournant
**caractérisé en ce qu'**il comprend :
• un moyen de génération (13, 113) d'un courant (Idref, Iqref) dans un domaine vectoriel,
• un moyen de calcul (14, 114) configuré pour faire une transformée du courant (Idref) du domaine vectoriel vers un domaine réel permettant la génération du courant de pilotage (i1, i2, i3), et configuré pour calculer une image de tension force contre-électromotrice (Ddq),
• un moyen de calcul inverse (15, 115) configuré pour faire une transformée inverse d'un paramètre mesuré dans le domaine réel sur les enroulements statoriques en une transformée inverse du paramètre dans le domaine vectoriel, le paramètre mesuré dans le domaine réél étant la tension force contre-électromotrice (fcem) aux bornes du moteur (11, 111),
• un premier moyen de comparaison (16, 117) de la valeur de la transformée inverse du paramètre avec une valeur maximale prédéfinie du paramètre et un deuxième moyen de comparaison (11 6) de la valeur de la transformée inverse de la tension force contre-électromotrice (Ddq) avec une valeur maximale prédéfinie (Dmax), dont les résultats permettent de piloter le moyen de génération (113) du courant dans le domaine vectoriel.

2. Dispositif (10) de pilotage selon la revendication 1, **caractérisé en ce que** le courant généré par le moyen de génération (13, 113) du courant (Idref) dans le domaine vectoriel est un courant de consigne direct établi en coordonnées de Park et **en ce que** le moyen de calcul (14, 114) est configuré pour recevoir un courant de consigne en quadrature (Iqref) établi en coordonnées de Park et proportionnel à la consigne de fonctionnement.

3. Dispositif (10) de pilotage selon l'une des revendications précédentes, **caractérisé en ce que** le moyen de génération (13, 113) du courant (Idref) est un correcteur de défluxage délivrant le courant (Idref) :
• nul si la valeur de la transformée inverse du paramètre est inférieure à la valeur maximale prédéfinie de paramètre (Dmax) ou
• non nul si la valeur de la transformée inverse du paramètre est supérieure ou égale à la valeur maximale prédéfinie de paramètre (Dmax).

4. Dispositif (10) de pilotage selon la revendication 3, **caractérisé en ce que** le moyen de génération (13, 113) du courant (Idref) est un correcteur de défluxage proportionnel intégral.

5. Dispositif (10) de pilotage selon la revendication 3, **caractérisé en ce que** le moyen de génération (13, 113) du courant (Idref) est un correcteur de défluxage intégral.

6. Procédé de pilotage en commande vectorielle d'un moteur électrique par un dispositif selon l'une des revendications précédentes, **caractérisé en ce qu'**il comporte l'étape suivante :
• génération d'un courant (Idref) destiné à modifier le champ magnétique produit par le stator de manière à ce que le paramètre corresponde à la consigne de fonctionnement (étape 203)

7. Procédé de pilotage en commande vectorielle d'un moteur électrique selon la revendication précédente, **caractérisé en ce qu'**il comporte au préalable une étape (200) de comparaison de la valeur de la transformée inverse du paramètre avec une valeur maximale prédéfinie de paramètre.

8. Procédé de pilotage en commande vectorielle d'un moteur électrique selon la revendication précédente, **caractérisé en ce qu'**il comporte une étape (201) de génération d'un courant (Idref) nul si la valeur de la transformée inverse du paramètre est inférieure à la valeur maximale prédéfinie de paramètre (Dmax).

9. Procédé de pilotage en commande vectorielle d'un moteur électrique selon la revendication 7, **caractérisé en ce qu'**il comporte une étape (202) de génération d'un courant (Idref) non nul si la valeur de la transformée inverse du paramètre est supérieure ou égale à la valeur maximale prédéfinie de paramètre (Dmax).

## Patentansprüche

1. Vorrichtung (10) zum Vektorsteuerungsantrieb eines Elektromotors (11, 111), die dafür geeignet ist, einen Betriebssollwert zu empfangen, wobei der Motor (11, 111) Folgendes umfasst:
• einen Stator, der Windungen umfasst, die dafür geeignet sind, einen Steuerstrom (i1, i2, i3) zu empfangen und ein Drehmagnetfeld zu erzeugen, wobei die Windungen des Stators an den Anschlüssen des Motors (11, 111) eine gegenelektromotorische Spannungskraft (Gegen-EMK) erzeugen,
• einen Rotor, der ein Magnetfeld erzeugt, das dazu bestimmt ist, dem Drehmagnetfeld zu folgen
**dadurch gekennzeichnet, dass** sie Folgendes umfasst:
• ein Mittel (13, 113) zum Erzeugen eines Stroms (Idref, Iqref) in einem Vektorbereich,
• ein Berechnungsmittel (14, 114), das dafür konfiguriert ist, eine Transformierte des Stroms (Idref) des Vektorbereichs zu einem realen Bereich vorzunehmen, was die Erzeugung des Steuerstroms (i1, i2, i3) ermöglicht, und dafür konfiguriert ist, ein gegenelektromotorisches Spannungskraftbild (Ddq) zu berechnen,
• ein inverses Berechnungsmittel (15, 115), das dafür konfiguriert ist, eine inverse Transformierte eines in dem realen Bereich an den Statorwindungen gemessenen Parameters in eine inverse Transformierte des Parameters in dem Vektorbereich vorzunehmen, wobei der in dem realen Bereich gemessene Parameter die gegenelektromotorische Spannungskraft (Gegen-EMK) an den Anschlüssen des Motors (11, 111) ist,
• ein erstes Mittel (16, 117) zum Vergleichen des Wertes der inversen Tansformierten des Parameters mit einem vordefinierten maximalen Wert des Parameters und ein zweites Mittel (116) zum Vergleichen des Wertes der inversen Transformierten der gegenelektromotorischen Spannungskraft (Ddq) mit einem vordefinierten Maximalwert (Dmax), wobei durch ihre Ergebnisse das Mittel (113) zum Erzeugen des Stroms in dem Vektorbereich gesteuert werden kann.

2. Steuerungsvorrichtung (10) nach Anspruch 1, **dadurch gekennzeichnet, dass** der durch das Mittel (13, 113) zum Erzeugen des Stroms (Idref) in dem Vektorbereich erzeugte Strom ein direkter Sollstrom ist, der in Park-Koordinaten gebildet wurde, und dass das Berechnungsmittel (14, 114) dafür konfiguriert ist, einen Quadratur-Sollstrom (Iqref) zu empfangen, der in Park-Koordinaten gebildet wurde und proportional zu dem Betriebssollwert ist.

3. Steuerungsvorrichtung (10) nach einem der vorhergehenden Ansprüche, **dadurch gekennzeichnet, dass** das Mittel (13, 113) zum Erzeugen des Stroms (Idref) ein Feldschwächungskompensator ist, der folgenden Strom (Idref) liefert:
• Null, wenn der Wert der inversen Transformierten des Parameters unter dem vordefinierten maximalen Parameterwert (Dmax) liegt oder
• nicht Null, wenn der Wert der inversen Transformierten des Parameters über dem vordefinierten maximalen Parameterwert (Dmax) liegt oder gleich diesem ist.

4. Steuerungsvorrichtung (10) nach Anspruch 3, **dadurch gekennzeichnet, dass** das Mittel (13, 113) zum Erzeugen des Stroms (Idref) ein proportionaler integraler Feldschwächungskompensator ist.

5. Steuerungsvorrichtung (10) nach Anspruch 3, **dadurch gekennzeichnet, dass** das Mittel (13, 113) zum Erzeugen des Stroms (Idref) ein integraler Feldschwächungskompensator ist.

6. Verfahren zum Vektorsteuerungsantrieb eines Elektromotors durch eine Vorrichtung nach einem der vorhergehenden Ansprüche, **dadurch gekennzeichnet, dass** es den folgenden Schritt umfasst:
• Erzeugen eines Stroms (Idref), der dazu bestimmt ist, das von dem Stator erzeugte Magnetfeld derart zu modifizieren, dass der Parameter dem Betriebssollwert entspricht (Schritt 203).

7. Verfahren zum Vektorsteuerungsantrieb eines Elektromotors nach dem vorhergehenden Anspruch, **dadurch gekennzeichnet, dass** es zuvor einen Schritt (200) des Vergleichens des Wertes der inversen Transformierten des Parameters mit einem vordefinierten maximalen Wert des Parameters umfasst.

8. Verfahren zum Vektorsteuerungsantrieb eines Elektromotors nach dem vorhergehenden Anspruch, **dadurch gekennzeichnet, dass** es einen Schritt (201) des Erzeugens eines Stroms (Idref) von Null umfasst, wenn der Wert der inversen Transformierten des Parameters unter dem vordefinierten maximalen Parameterwert (Dmax) liegt.

9. Verfahren zum Vektorsteuerungsantrieb eines Elektromotors nach Anspruch 7, **dadurch gekennzeichnet, dass** es einen Schritt (202) des Erzeugens eines Stroms (Idref) von nicht Null umfasst, wenn der Wert der inversen Transformierten des Parameters über dem vordefinierten maximalen Parameterwert (Dmax) liegt oder gleich diesem ist.

## Claims

1. Vector control driving device (10) for an electric motor (11, 111) suitable for receiving an operating setpoint, the motor (11, 111) comprising:
• a stator comprising windings, suitable for receiving a driving current (i1, i2, i3) and producing a rotating magnetic field, the windings of the stator generating a back electromotive force voltage (BEMF) at the terminals of the motor (11, 111)
• a rotor producing a magnetic field intended to follow the rotating magnetic field
**characterised in that** it comprises:
• a means (13, 113) for generating a current (Idref, Iqref) in a vector domain,
• a computation means (14, 114) configured to carry out a transform of the current (Idref) from the vector domain to a real domain allowing for the generation of the driving current (i1, i2, i3), and configured to compute a back electromotive force voltage image (Ddq),
• an inverse computation means (15, 115) configured to carry out an inverse transform of a parameter measured in the real domain on the stator windings into an inverse transform of the parameter in the vector domain, the parameter measured in the real domain being the back electromotive force voltage (BEMF) at the terminals of the motor (11, 111),
• a first means (16, 117) for comparing the value of the inverse transform of the parameter with a predefined maximum value of the parameter and a second means (116) for comparing the value of the inverse transform of the back electromotive force voltage (Ddq) with a maximum predefined value (Dmax), the results of which make it possible to drive the means (113) for generating the current in the vector domain.

2. Driving device (10) according to Claim 1, **characterised in that** the current generated by the means (13, 113) for generating the current (Idref) in the vector domain is a direct setpoint current established in Park coordinates and **in that** the computation means (14, 114) is configured to receive a quadrature setpoint current (Iqref) established in Park coordinates and proportional to the operating setpoint.

3. Driving device (10) according to one of the preceding claims, **characterised in that** the means (13, 113) for generating the current (Idref) is a defluxing corrector delivering the current (Idref):
• zero if the value of the inverse transform of the parameter is less than the predefined maximum parameter value (Dmax) or
• non-zero if the value of the inverse transform of the parameter is greater than or equal to the predefined maximum parameter value (Dmax).

4. Driving device (10) according to Claim 3, **characterised in that** the means (13, 113) for generating the current (Idref) is a proportional integral defluxing corrector.

5. Driving device (10) according to Claim 3, **characterised in that** the means (13, 113) for generating the current (Idref) is an integral defluxing corrector.

6. Method for vector control driving of an electric motor by a device according to one of the preceding claims, **characterised in that** it comprises the following step:
• generation of a current (Idref) intended to modify the magnetic field produced by the stator so that the parameter corresponds to the operating setpoint (step 203).

7. Method for vector control driving of an electric motor according to the preceding claim, **characterised in that** it comprises a preliminary step (200) of comparison of the value of the inverse transform of the parameter with a predefined maximum parameter value.

8. Method for vector control driving of an electric motor according to the preceding claim, **characterised in that** it comprises a step (201) of generation of a current (Idref) that is zero if the value of the inverse transform of the parameter is less than the predefined maximum parameter value (Dmax).

9. Method for vector control driving of an electric motor according to Claim 7, **characterised in that** it comprises a step (202) of generation of a current (Idref) that is non-zero if the value of the inverse transform of the parameter is greater than or equal to the predefined maximum parameter value (Dmax).
